# EUROPÄISCHE PATENTSCHRIFT

(11) **EP 2 448 799 B1**
(45) Veröffentlichungstag und Bekanntmachung des Hinweises auf die Patenterteilung: **08.04.2015**
(21) Anmeldenummer: 10726972.2
(22) Anmeldetag: 24.06.2010
(51) Int. Cl.: B60T 8/36, B60T 15/02

(54) **DRUCKSTEUERVENTILANORDNUNG MIT AN EINEN VORSPRUNG DES DECKELS ANGEFORMTER DRUCKMITTELLEITFLÄCHE**
PRESSURE CONTROL VALVE ARRANGEMENT HAVING PRESSURE MEDIUM GUIDING SURFACE INTEGRALLY FORMED ONTO A PROJECTION OF THE COVER
ENSEMBLE MODULATEUR DE PRESSION À SURFACE DE GUIDAGE DE FLUIDE SOUS PRESSION FORMÉE SUR UNE PARTIE SAILLANTE DU COUVERCLE

(30) Priorität: 29.06.2009 DE 102009030900
(43) Veröffentlichungstag der Anmeldung: 09.05.2012
(73) Patentinhaber: KNORR-BREMSE Systeme für Nutzfahrzeuge GmbH, 80809 München (DE)
(72) Erfinder: GREBE, Jan, 80939 München (DE); BRENNER, Dirk, 70563 Stuttgart (DE); WEIPPERT, Jochen, 80805 München (DE); ROHN, Wolfgang, 81247 München (DE); JAEHNS, Harald, 81549 München (DE)
(74) Vertreter: Schönmann, Kurt
(86) Internationale Anmeldenummer: PCT/EP2010/059020
(87) Internationale Veröffentlichungsnummer: WO 2011/000778

(56) Entgegenhaltungen:
- EP-A1- 0 266 555
- DE-A1- 3 821 044

## Beschreibung

Die Erfindung betrifft eine Drucksteuerventilanordnung zur Steuerung des Fluiddrucks in einer ABS-Bremsanlage eines Fahrzeugs derart, dass während einer Blockierneigung einzelner Räder des Fahrzeugs der Bremsdruck in wenigstens einem zugeordneten Bremszylinder adaptiv anpassbar ist, wobei in einem Gehäuse der Drucksteuer-ventilanordnung wenigstens ein Membranventil aufgenommen ist, welches als Ventilkörper eine Membrane aufweist, die durch Einleiten von Druckmittel in eine Steuerkammer beaufschlagbar ist, die gehäuseaußenseitig durch einen Deckel abgedeckt ist, derart, dass die Steuerkammer zwischen der Membrane und dem Deckel ausgebildet wird, und wobei in dem Gehäuse im Bereich des Deckels wenigstens ein Druckmittel führender Druckmittelkanal ausgebildet ist, gemäß dem Oberbegriff von Anspruch 1.

ABS (Antiblockiersystem) verhindert ein Blockieren der Räder und tritt in Funktion, wenn zwischen einem Reifen und der Fahrbahn ein größerer Kraftschluss beansprucht wird, als übertragbar ist, d.h. wenn durch den Fahrer überbremst wird. Bei Überbremsung erkennt das zentrale elektronische Steuergerät der ABS-Bremsanlage aus Drehzahlfühlersignalen die Blockierneigung eines oder mehrerer Räder und berechnet daraus die Ansteuerung der auf den zugeordneten Bremszylinder einwirkenden Drucksteuerventilanordnung. Der Bremsdruck wird dann mittels der Drucksteuerventilanordnung durch Senken, Halten oder Aufbauen nach Maßgabe des Radverhaltens und damit der Reibungsverhältnisse zwischen Reifen und Fahrbahn auf einen optimalen Schlupf eingestellt.

ABS-Drucksteuerventilanordnungen ohne Relaiswirkung, auf welche sich die vorliegende Erfindung bezieht, finden bei Fahrzeugen wie beispielsweise Nutzfahrzeugen, Omnibussen, Sattelzugmaschinen wie auch bei Anhängern Verwendung. Drucksteuerventilanordnungen ohne Relaiswirkung verfügen meist t über 3 / 2-Wege-Magnetventile als Vorsteuerventile von Membranventilen, wobei eine elektronische Steuereinrichtung die 3/2-Wege-Magnetventile ansteuert, um die für den ABS-Betrieb notwendigen Funktionen "Druckhalten", "Druckabbau" und "Druckaufbau" durchführen zu können. Während einer Bremsung ohne Ansprechen des ABS (keine Blockierneigung eines Rades) durchströmt das Druckmittel, meist Luft beim Be- und Entlüften der Bremszylinder die Drucksteuerventilanordnungen ungehindert in beiden Richtungen. Damit ist sichergestellt, dass die Funktion der Betriebsbremsanlage nicht durch die ABS-Drucksteuerventilanordnung beeinflusst wird.

Drucksteuerventile der gattungsgemäßen Art als 1-Kanal-Drucksteuerventile für Blockierschutzanlagen von Kraftfahrzeugen weisen innerhalb des Gehäuses je ein Membranventil als Halteventil und als Auslassventil auf sowie je ein elektromagnetisches Steuerventil für das Halteventil und das Auslassventil auf. Die beiden Membranventile beinhalten jeweils eine mit dem Druck in einer Steuerkammer beaufschlagbare Membrane, wobei die Steuerkammer durch einen am Gehäuse befestigten Deckel nach außen hin verschlossen ist.

Eine gattungsgemäße Drucksteuerventilanordnung einer ABS-Bremsanlage ist beispielsweise aus der EP 0 266 555 A1 bekannt. Bei den Drucksteuerventilanordnungen des Stands der Technik sind die beiden Membranventile meist am Gehäuse seitlich angeordnet, wobei die entsprechenden Vorsteuerräume durch seitlich am Gehäuse befestigte Deckel verschlossen sind. Diese Deckel werden durch Urformverfahren wie Spritzgießen hergestellt. Weiterhin sind im Gehäuse Druckmittelkanäle ausgebildet, um innerhalb des Gehäuses Druckmittel von und zu den verschiedenen Anschlüssen der Drucksteuerventilanordnung bzw. zu und von den Membranventilen bzw. von und zu den diese steuernden elektromagnetischen Ventile zu führen.

Die Druckmittelkanäle verlaufen innerhalb des Gehäuses bevorzugt in vertikaler und/oder in horizontaler Richtung, weil dann das Gehäuse während der spanabhebenden Fertigung der Druckmittelkanäle beispielsweise durch ein Bearbeitungszentrum nicht umgespannt werden muss. Strömungstechnisch problematisch stellt sich eine Umlenkung eines solchen Druckmittelkanals dar, weil die Strömungsumlenkung des betreffenden Druckmittelkanal dann in der Regel 90 Grad beträgt (Umlenkung von der Vertikalen in die Horizontale bzw. umgekehrt) und sich folglich relativ große Strömungsverluste durch die abrupte Umlenkung in einem solchen Druckmittelkanalknie ergeben. Weil aber bei Drucksteuerventilanordnungen von ABS/ASR-Systemen eine hohe Dynamik gefordert ist und beispielsweise im Rahmen der Funktion "Drucksenken" bei einem Überschreiten des zulässigen Radschlupfes eine möglichst schnelle Entlüftung des betreffenden Bremszylinders gefordert ist, sind solche durch Umlenkungen bedingte Strömungsverluste möglichst gering zu halten.

Weil die Einbaumaße einer solchen Drucksteuerventilanordnung, insbesondere deren Einbaubreite aufgrund beengter Platzverhältnisse standardisiert sind und nicht veränderbar sind, kann eine Lösung dieses Problems nicht darin bestehen, die Strömungsquerschnitte der Druckmittelkanäle zu vergrößern.

Der Erfindung liegt demgegenüber die Aufgabe zugrunde, eine Drucksteuerventilanordnung der eingangs erwähnten Art derart weiter zu bilden, dass die Strömungsverluste bzw. der Strömungswiderstand insbesondere in eine Druckmittelströmung umlenkenden Druckmittelkanälen geringer wird. Dabei soll der Herstell- und Fertigungsaufwand der diese Aufgabe lösenden Mittel möglichst gering sein.

Diese Aufgabe wird erfindungsgemäß durch die Merkmale von Anspruch 1 gelöst.

### Offenbarung der Erfindung

Die Erfindung schlägt vor, dass wenigstens ein Deckel wenigstens einen in den gehäuseseitigen Druckmittelkanal hinein ragenden Vorsprung aufweist, an welchem eine Druckmittelleitfläche zur Lenkung der Strömung des im Druckmittelkanal geführten Druckmittels ausgebildet ist.

Da ein solcher Deckel ohnehin zur Abdeckung bzw. zur Abdichtung einer Steuerkammer eines Membranventils der Drucksteuerventilanordnung vorhanden ist und er gemäß einer weiteren Funktion nun auch Träger eines Vorsprungs mit strömungsleitender oder im Falle einer Umlenkung strömungsumlenkender Druckmittelleitfläche ist, erfüllt er in vorteilhafter Weise eine Doppelfunktion in einem einzigen Bauteil.

Die strömungsleitende bzw. strömungsumlenkende Druckmittelleitfläche des in den Druckmittelkanal hinein ragenden Vorsprungs ist dabei vorteilhaft derart gestaltet, dass die ohne die Fläche in dem Druckmittelkanal auftretenden Strömungsverluste bzw. der Strömungswiderstand des betreffenden Druckmittelkanals reduziert wird.

Aufgrund des reduzierten Strömungswiderstands ergibt sich folglich bei unverändertem Strömungsquerschnitt des betreffenden Druckmittelkanals eine verbesserte Dynamik der Drucksteuerventilanordnung, welche sich hinsichtlich der geforderten schnellen Abfolge von Phasen des Druckabbaus, des Druckhaltens und Drucksteigerns positiv auswirkt.

Durch die in den Unteransprüchen aufgeführten Maßnahmen sind vorteilhafte Weiterbildungen und Verbesserungen der in Anspruch 1 angegebenen Erfindung möglich.

Bevorzugt ragt der Vorsprung mit der Druckmittelleitfläche in den Druckmittelkanal an einer Stelle hinein, an welcher eine Umlenkung der Strömung des Druckmittels innerhalb des Druckmittelkanals ausgehend von einem in einer Richtung führenden Abschnitt des Druckmittelkanals in einen in einer anderen Richtung führenden Abschnitt des Druckmittelkanals vorgesehen ist. Um dies zu realisieren kann sich der eine oder der andere Abschnitt des Druckmittelkanals beispielsweise bis an eine Mündungsöffnung in einer Seitenfläche des Gehäuses erstrecken, in welche dann der Vorsprung des Deckels zapfenartig hineinragt.

Bevorzugt beträgt die Umlenkung der Strömung des Druckmittels innerhalb des Druckmittelkanals im wesentlichen 90 Grad, wobei die Druckmittelleitfläche des Vorsprungs ausgebildet ist, um die Strömung des Druckmittels von der einen Richtung in die andere Richtung umzulenken.

Gemäß einer Weiterbildung ist der Druckmittelkanal ein Entlüftungskanal, welcher Druckluft von einem als Auslassventil ausgebildeten Membranventil einer Entlüftung der Drucksteuerventilanordnung zuführt. Hierbei dient bevorzugt ein zentraler Bereich des Deckels zur Abdeckung der Steuerkammer des als Auslassventil ausgebildeten Membranventils und der wenigstens eine Vorsprung mit der Druckmittelleitfläche ist an einer Nase des Deckels randseitig ausgebildet.

Wenn der mit dem Vorsprung und der Druckmittelleitfläche versehene Deckel als einstückiger Spritzgussformling aus Kunststoff oder Metall ausgebildet wird, sind die Herstell- und Montagekosten vorteilhaft gering.

Weitere die Erfindung verbessernde Maßnahmen werden nachstehend gemeinsam mit der Beschreibung eines bevorzugten Ausführungsbeispiels der Erfindung anhand der Zeichnung näher dargestellt. In der Zeichnung zeigt
- Fig. 1: eine Prinzipdarstellung einer ABS-Bremsanlage als allgemeines Schema eines 4S/4K-ABS-Bremsanlage eines Fahrzeugs,
- Fig. 2a: eine schematische Darstellung einer einen Bremszylinder ansteuernden Drucksteuerventilanordnung im geöffneten Zustand (Druckaufbau),
- Fig. 2b: eine schematische Darstellung der Drucksteuerventilanordnung von Figur 2a im geschlossenen Zustand (Druckabbau),
- Fig.3: eine Seitenansicht einer konkreten Ausführung der Drucksteuerventilanordnung von Fig.2a und Fig.2b gemäß einer bevorzugten Ausführungsform der Erfindung;
- Fig.4: eine Schnittdarstellung entlang der Linie IV-IV von Fig.3.

### Beschreibung des Ausführungsbeispiels

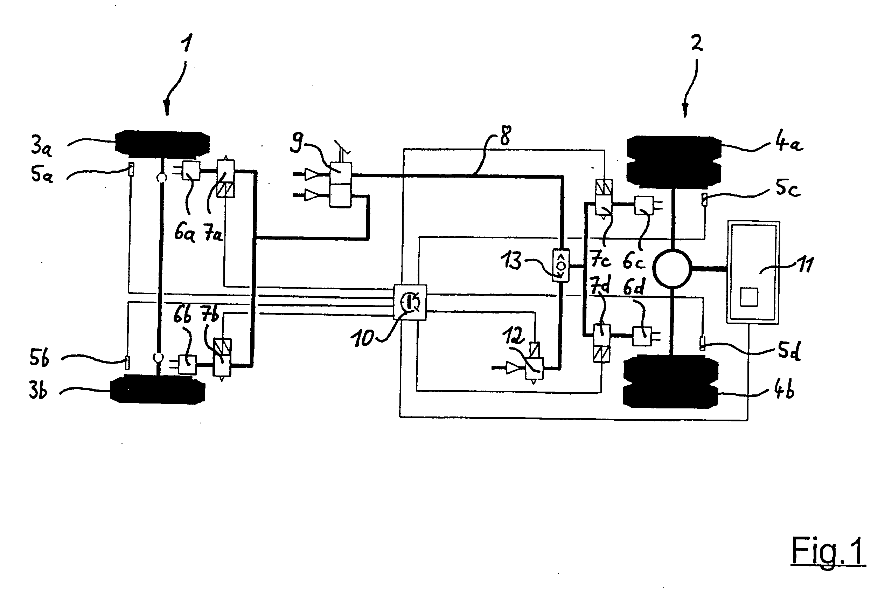

Gemäß Fig. 1 weist ein mit einer ABS-Bremsanlage ausgestattetes Fahrzeug eine Vorderachse 1 sowie eine Hinterachse 2 auf. An der Vorderachse 1 sind Räder 3a und 3b angeordnet; die Hinterachse 2 weist beispielsweise jeweils mit Zwillingsbereifung ausgestattete Räder 4a und 4b auf. Die zur Bremsung dieser Räder 3a, 3b und 4a, 4b dienende ABS-Bremsanlage ist hier nach Art einer 4S/4K-Anlage (vier Sensoren, vier Kanäle) ausgebildet. Dies bedeutet, dass hier insgesamt vier Drehzahlsensoren 5a-5d sowie vier Drucksteuerventilanordnungen 7a-7d zur Verfügung stehen. Die Drucksteuerventilanordnungen 7a-7d dienen der Ansteuerung von jeweils zugeordneten Bremszylindern 6a-6d. Über eine sich verzweigende pneumatische Bremsdruckleitung 8 stehen alle Drucksteuerventilanordnungen 7a-7d mit einem Fußbremsventil 9 in Verbindung.

Der Fahrer erzeugt bei Betätigung des Fußbremsventils 9 einen Bremsdruck, der über die pneumatische Bremsdruckleitung 8 die Drucksteuerventilanordnungen 7a-7d passierend an die den Rädern 3a,3b sowie den Rädern 4a,4b zugeordneten Bremszylindern 6a-6d weitergeleitet wird.

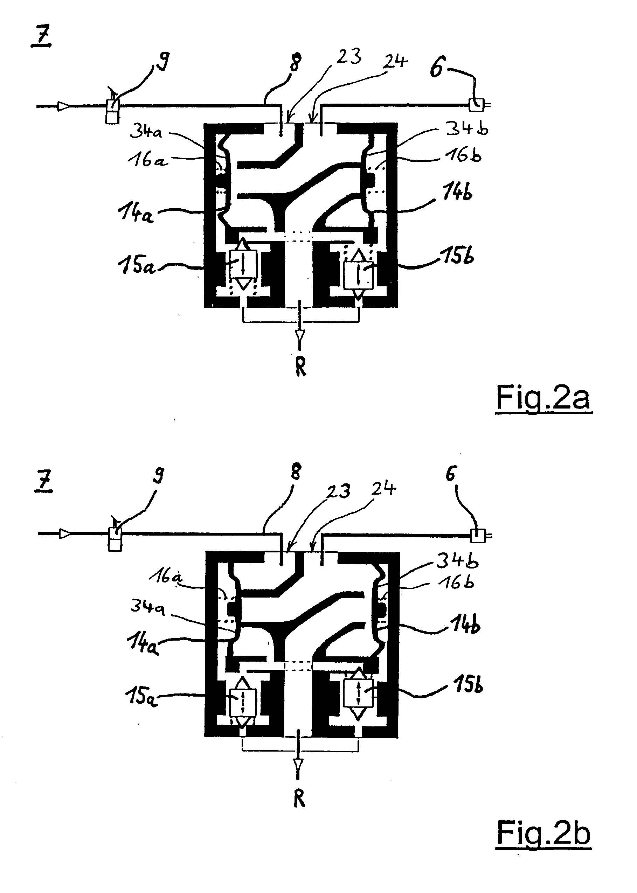

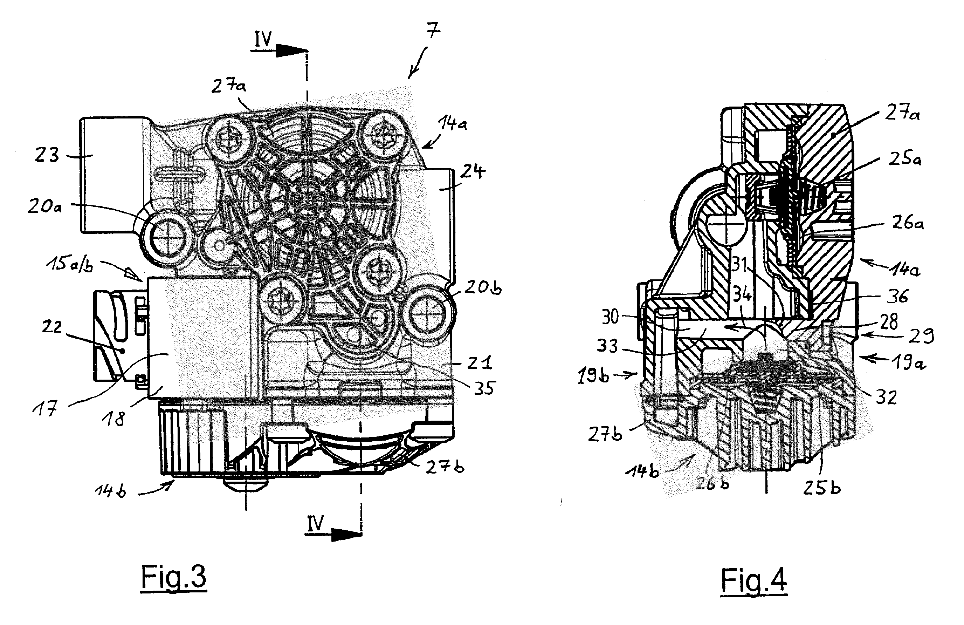

Die Drucksteuerventilanordnungen 7a-7d sind über integrierte, in Fig.2a, Fig.2b und Fig.4 gezeigte Elektromagnetventile 15a, 15b ansteuerbar und sind zu diesem Zwecke mit einer zentralen elektronischen Steuereinheit 10 elektrisch verbunden. Eingangsseitig steht die elektronische Steuereinheit 10 mit den vier die Radgeschwindigkeiten ermittelnden Drehzahlsensoren 5a-5b in Verbindung. Im Falle des Blockierens eines Rades 3a-3d wird entsprechend einer ABS-Regelung nach Maßgabe der elektronischen Steuereinheit 10 der vom Fahrer über das Fußbremsventil 9 eingesteuerte Bremsdruck durch die entsprechende Drucksteuerventilanordnung 7a-7d soweit herabgesetzt, bis das Blockieren beseitigt ist. Die ABS-Bremsanlage des vorliegenden Ausführungsbeispiels umfasst weiterhin eine ASR-Funktion, welche eine ASR-Einheit 11 zum Reduzieren des Motormoments wie ein ASR-Magnetventil 12 und ein Wechselventil 13 umfasst.

Die gemäß Fig.2a im Rahmen der ABS-Bremsanlage zum Zwecke der ABS-Regelung eingesetzte Drucksteuerventilanordnung 7 ist hier nach Art einer 1-Kanal-Drucksteuerventilanordnung aufgebaut und besteht im Wesentlichen aus zwei integrierten Membranventilen 14a und 14b und zwei diese ansteuernden, federbelasteten Elektromagnetventilen 15a, 15b. Die Membranventile 14a und 14b sind jeweils durch Federelemente 16a, 16b in Schließrichtung belastet und werden über die jeweils zugeordneten Elektromagnetventile 15a und 15b vorgesteuert.

Die Drucksteuerventilanordnung 7 ist in Fig.2a in seiner Offenstellung gezeigt, bei der ein Druckaufbau zum angeschlossenen Bremszylinder 6 erfolgt. Hierbei wird keines der Magnetventile 15a und 15b elektrisch angesteuert. In der gezeigten Stellung drückt die vom Fußbremsventil 9 kommende Druckluft das als Einlassventil ausgebildete Membranventil 14a auf. Durch das normal geschlossene Elektromagnetventil 15a wird verhindert, dass das zugeordnete Membranventil 14a wieder verschlossen wird. Durch das normal geöffnete zweite Elektromagnetventil 15b verschließt der vom Fußbremsventil 9 kommende Bremsdruck das als Auslassventil dienende zweite Membranventil 14b. Somit durchläuft die Druckluft ungehindert die Drucksteuerventilanordnung 7. In diesem Zustand befindet sich die Drucksteuerventilanordnung 7 auch dann, wenn keine ABS-Regelung erfolgt.

Zum Konstanthalten des Bremsdrucks in einem Bremszylinder 6a bis 6d ist lediglich das Elektromagnetventil 15a zu bestromen, wodurch dieses öffnet und infolgedessen der vom Fußbremsventil 9 kommende Bremsdruck das einlassseitige Membranventil 14a zudrückt. Nun ist der Druck auf der rechten und linken Seite des Membranventils 14a gleich groß. Da aber die Wirkfläche auf der linken Seite des Membranventils 14a größer ist, wird das Membranventil 14a geschlossen. Entsprechendes gilt für das über das Elektromagnetventil 15b angesteuerte auslassseitige Membranventil 14b. Die Drucksteuerventilanordnung 7 verschließt zum Konstanthalten des Drucks also die vom Fußbremsventil 9 zum Bremszylinder 6 verlaufende pneumatische Bremsdruckleitung 8.

Gemäß Fig. 2b wird ein Druckabbau in einem Bremszylinder 6a bis 6d dadurch erzielt, dass beide Elektromagnetventile 15a und 15b bestromt werden. Für das Elektromagnetventil 15a und das zugeordnete einlassseitige Membranventil 15a gilt das vorstehend zum Druckhalten Beschriebene. Hingegen ist das andere Elektromagnetventil 15b wegen der Bestromung geschlossen. Deshalb drückt der vom Bremszylinder 6 kommende Druck das auslassseitige Membranventil 14b auf und der Bremszylinder 6 wird entlüftet.

Die vorstehend beschriebenen Funktionen der Drucksteuerventilanordnung 7 werden nach Maßgabe der elektronischen Steuereinheit 10 im Rahmen einer ABS/ASR-Regelung im eingangs beschriebenen Sinne durchgeführt.

In Fig.3 bis Fig.4 ist die in Fig.2a und Fig.2b lediglich schematisch dargestellte Drucksteuerventilanordnung 7 in einer konkreten Ausführungsform in Einbaulage gezeigt, d.h. oben dargestellte Bauteile befinden sich oben. Bei dieser Ausführungsform sind die beiden Elektromagnetventile 15a, 15b zum Vorsteuern der Membranventile 14a, 14b in einem Doppelmagnetventil zusammengefasst, dessen Funktion jedoch analog zu Einzelventilen 15a, 15b ist.

Die beiden Elektromagnetventile 15a, 15b weisen einen in einem Block 17 zusammengefassten Doppelmagneten 18 mit zwei Magnetspulen auf, welche mit zwei Magnetventilsitzen zusammen wirken. Durch Bestromung der Magnetspulen werden mit den Magnetventilsitzen der Elektromagnetventile 15a, 15b zusammen wirkende und hier nicht explizit gezeigte Magnetanker als Ventilschließglieder betätigt.

Der den Doppelmagneten 18 umfassende Block 17 ist an einem Gehäuse 21 der Drucksteuerventilanordnung 7 vorzugsweise frontseitig befestigt und weist einen Steckeranschluss 22 zur Stromversorgung des Doppelmagneten 18 auf. Dieses Gehäuse 21 weist weiterhin einen Druckmittelanschluss 23 zur Druckbeaufschlagung und/oder Druckentlastung der Drucksteuerventilanordnung 7 sowie einen Arbeitsanschluss 24 zum Anschluss des Bremszylinders 6 auf (Fig.3).

Der Druckmittelanschluss 23 ist, wie Fig.2a und Fig.2b zeigen, über die Bremsdruckleitung 8 mit dem Fuß- oder Betriebsbremsventil 9 der druckmittelbetätigten Bremseinrichtung verbunden und wird entsprechend einer Betätigung des Fußbremsventils 9 be- oder entlüftet.

Wie insbesondere aus Fig.3 hervorgeht, ist das Gehäuse 21 mit wenigstens einer, hier beispielsweise zwei in beide Seitenflächen 19a, 19b des Gehäuses 21 mündenden Durchgangsbohrungen 20a, 20b versehen, durch welche Haltemittel zum Halten der Drucksteuerventilanordnung an einem Trägerkörper, beispielsweise an einem Chassis des Fahrzeugs hindurch ragen, beispielsweise Schrauben. Die Mittelachsen der beiden Durchgangsbohrungen 20a, 20b sind bevorzugt parallel zueinander. Die axiale Länge der Durchgangsbohrungen 20a, 20b gilt als standardisiertes Einbaumaß der Drucksteuerventilanordnung 7 und ist aus Platzgründen festgelegt und nicht veränderbar, sie legt die maximal zulässige Breite B des Gehäuses 21 fest.

Das eine Membranventil 14a ist bevorzugt seitlich und das andere Membranventil 14b bevorzugt bodenseitig am Gehäuse 21 angeordnet, wie Fig.4 zeigt. Ein solches Membranventil 14a, 14b weist als Ventilkörper eine Membrane 25a, 25b auf, die durch Einleiten von Druckmittel in eine Steuerkammer 26a, 26b beaufschlagbar ist, die gehäuseaußenseitig jeweils durch einen mittels Urformen wie Spritzgießen hergestellten Deckel 27a, 27b abgedeckt ist, welcher am Gehäuse 21 befestigt ist. Dabei wird die Steuerkammer 26a, 26b zwischen der Membrane 25a, 25b und dem Deckel 27a, 27b ausgebildet.

Wie insbesondere aus Fig.4 hervorgeht, weist der die Steuerkammer 26a des seitlich angeordneten Membranventils 14a verschließende Deckel 27a einen Vorsprung oder Zapfen 28 auf, welcher von außen her in eine Mündungsöffnung 29 eines gehäuseseitigen Druckmittelkanals 30 hinein ragt. An dem Vorsprung 28 ist eine Druckmittelleitfläche 31 zur Lenkung der Strömung des im Druckmittelkanal 30 geführten Druckmittels ausgebildet.

Durch den Druckmittelkanal 30 soll bevorzugt eine Umlenkung der Strömung des Druckmittels ausgehend von einem in einer Richtung führenden stromaufwärtigen Teil des Druckmittelkanals 30 in einen in einer anderen Richtung führenden stromabwärtigen Teil des Druckmittelkanals 30 stattfinden.

Im bevorzugten Ausführungsbeispiel findet durch den Druckmittelkanal 30 beispielsweise eine 90-Grad-Umlenkung der Strömung des Druckmittels von einem ersten, in Fig.4 vertikalen Abschnitt 32 des Druckmittelkanals 30, welcher mit einem Ventilsitz des als Auslassventil fungierenden Membranventils 14a in Strömungsverbindung steht, dessen Steuerkammer 26a durch den Deckel 27a abgedeckt ist, in einen in Fig.4 horizontalen Abschnitt 33 des Druckmittelkanals 30 statt, welcher mit einem am Gehäuse 21 ausgebildeten und hier nicht explizit sichtbaren Entlüftungsanschluss in Strömungsverbindung steht, wie der die Strömungsrichtung symbolisierende Pfeil 34 in Fig.4 veranschaulicht.

Der horizontale Abschnitt 33 des Druckmittelkanals ist dabei vom Inneren des Gehäuses 21 gesehen bis an die Mündungsöffnung 29 in der Seitenfläche 19a des Gehäuses 21 erweitert. In diese Mündungsöffnung 29 ragt der Vorsprung 28 des Deckels 27a zapfenartig hinein.

Im vorliegenden Fall ist der Druckmittelkanal 30 daher bevorzugt ein Entlüftungskanal, welcher Druckluft von dem an einen Bremszylinder angeschlossenen Arbeitsanschluss 24 über das als Membranventil 14b ausgeführte Auslassventil einer Entlüftung der Drucksteuerventilanordnung 7 zuführt.

Die Druckmittelleitfläche 31 des Vorsprungs 28 ist ausgebildet, um die Strömung des Druckmittels von der einen Richtung (hier vertikale Richtung) in die andere Richtung (hier horizontale Richtung) umzulenken bzw. eine solche Umlenkung zu unterstützen, vorzugsweise durch eine sphärische Fläche.

Besonders bevorzugt wird der mit dem Vorsprung 28 und der Druckmittelleitfläche 31 versehene Deckel 27a als einstückiger Spritzgussformling aus Kunststoff oder Metall ausgebildet.

Besonders bevorzugt dient der zentrale Bereich des Deckels 27a zur Abdeckung der Steuerkammer 26a und der Vorsprung 28 mit der Druckmittelleitfläche 31 ist an dem Deckel 27a randseitig ausgebildet, beispielsweise an einer Nase 35 des Deckels 27a, wie Fig.3 veranschaulicht. Eine entsprechende Dichtung 36 im Bereich der Mündungsöffnung 29 sorgt für eine Abdichtung des Druckmittelkanals 30 zur Außenseite hin.

Ein Deckel 27a mit Vorsprung 28 und Druckmittelleitfläche 31 ist nicht notwendigerweise auf eine Verwendung für einen Druckmittelkanal 30 mit einer 90-Grad-Umlenkung der Strömungsrichtung beschränkt. Vielmehr kann ein solcher Deckel 27a für jegliche Art von Druckmittelkanal 30, insbesondere auch für solche ohne Strömungsumlenkung verwendet werden, bei denen durch eine Druckmittelleitfläche eine Reduzierung des Strömungswiderstands erzielbar ist.

### Bezugszeichenliste

- 1: Vorderachse
- 2: Hinterachse
- 3: Rad
- 4: Rad
- 5: Drehzahlsensor
- 6: Bremszylinder
- 7: Drucksteuerventilanordnung
- 8: Bremsdruckleitung
- 9: Fußbremsventil
- 10: Steuereinheit
- 11: ASR-Einheit
- 12: ASR-Magnetventil
- 13: Wechselventil
- 14 a/b: Membranventil
- 15 a/b: Elektromagnetventil
- 16 a/b: Federelement
- 17: Block
- 18: Doppelmagnet
- 19 a/b: Seitenfläche
- 20 a/b: Durchgangsbohrung
- 21: Gehäuse
- 22: Steckeranschluss
- 23: Druckmittelanschluss
- 24: Arbeitsanschluss
- 25 a/b: Membrane
- 26 a/b: Steuerkammer
- 27 a/b: Deckel
- 28: Vorsprung
- 29: Mündungsöffnung
- 30: Druckmittelkanal
- 31: Druckmittelleitfläche
- 32: Abschnitt
- 33: Abschnitt
- 34: Pfeil
- 35: Nase
- 36: Dichtung

## Patentansprüche

1. Drucksteuerventilanordnung (7) zur Steuerung des Fluiddrucks in einer ABS-Bremsanlage eines Fahrzeugs derart, dass während einer Blockierneigung einzelner Räder des Fahrzeugs der Bremsdruck in wenigstens einem zugeordneten Bremszylinder (6) adaptiv anpassbar ist, wobei in einem Gehäuse (21) der Drucksteuerventilanordnung (7) wenigstens ein Membranventil (14a) aufgenommen ist, welches als Ventilkörper eine Membrane (25a) aufweist, die durch Einleiten von Druckmittel in eine Steuerkammer (26a, 26b) beaufschlagbar ist, die gehäuseaußenseitig durch einen Deckel (27a) abgedeckt ist, derart, dass die Steuerkammer (26a) zwischen der Membrane (25a) und dem Deckel (27a) ausgebildet wird, und wobei in dem Gehäuse (21) im Bereich des Deckels (27a) wenigstens ein Druckmittel führender Druckmittelkanal (30) ausgebildet ist, **dadurch gekennzeichnet,** dass wenigstens ein Deckel (27a) wenigstens einen in den gehäuseseitigen Druckmittelkanal (30) hinein ragenden Vorsprung (28) aufweist, an welchem eine Druckmittelleitfläche (31) zur Lenkung der Strömung des im Druckmittelkanal (30) geführten Druckmittels ausgebildet ist.

2. Drucksteuerventilanordnung nach Anspruch 1, **dadurch gekennzeichnet,** dass der Vorsprung (28) mit der Druckmittelleitfläche (31) in den Druckmittelkanal (30) an einer Stelle hineinragt, an welcher eine Umlenkung der Strömung des Druckmittels innerhalb des Druckmittelkanals (30) ausgehend von einem in einer Richtung führenden Abschnitt (32) des Druckmittelkanals (30) in einen in einer anderen Richtung führenden Abschnitt (33) des Druckmittelkanals (30) vorgesehen ist.

3. Drucksteuerventilanordnung nach Anspruch 2, **dadurch gekennzeichnet,** dass sich der eine oder der andere Abschnitt (33) des Druckmittelkanals (30) bis an eine Mündungsöffnung (29) in einer Seitenfläche (19a) des Gehäuses (21) erstreckt, in welche der Vorsprung (28) des Deckels (27a) zapfenartig hineinragt.

4. Drucksteuerventilanordnung nach Anspruch 2 oder 3, **dadurch gekennzeichnet,** dass die Umlenkung der Strömung des Druckmittels innerhalb des Druckmittelkanals (30) im wesentlichen 90 Grad beträgt.

5. Drucksteuerventilanordnung nach einem der Ansprüche 2 bis 4, **dadurch gekennzeichnet,** dass die Druckmittelleitfläche (31) des Vorsprungs (28) ausgebildet ist, um die Strömung des Druckmittels von der einen Richtung in die andere Richtung umzulenken.

6. Drucksteuerventilanordnung nach einem der vorhergehenden Ansprüche, **dadurch gekennzeichnet,** dass der Druckmittelkanal (30) ein Entlüftungskanal ist, welcher Druckluft von einem als Auslassventil ausgebildeten Membranventil (14a) einer Entlüftung der Drucksteuerventilanordnung (7) zuführt.

7. Drucksteuerventilanordnung nach Anspruch 6, **dadurch gekennzeichnet,** dass ein zentraler Bereich des Deckels (27a) zur Abdeckung der Steuerkammer (26a) des als Auslassventil ausgebildeten Membranventils (14a) dient und der wenigstens eine Vorsprung (28) mit der Druckmittelleitfläche (31) an einer Nase (35) des Deckels (27a) randseitig ausgebildet ist.

8. Drucksteuerventilanordnung nach einem der vorhergehenden Ansprüche, **dadurch gekennzeichnet,** dass der mit dem Vorsprung (28) und der Druckmittelleitfläche (31) versehene Deckel (27a) als einstückiger Spritzgussformling aus Kunststoff oder Metall ausgebildet ist.

9. Drucksteuerventilanordnung nach einem der vorhergehenden Ansprüche, **dadurch gekennzeichnet,** dass wenigstens ein von einer elektronischen Steuereinrichtung (10) ansteuerbares elektromagnetisches Steuerventil (15a) zum Vorsteuern des wenigstens einen Membranventils (14a) vorgesehen ist.

10. Bremsschlupfgeregelte und druckmittelbetätigte Bremseinrichtung eines Fahrzeugs, beinhaltend wenigstens eine Drucksteuerventilanordnung (7) nach einem der vorhergehenden Ansprüche.

## Claims

1. Pressure control valve arrangement (7) for controlling the fluid pressure in an ABS brake system of a vehicle in such a way that, while there is a tendency of individual wheels of the vehicle to lock, the brake pressure in at least one associated brake cylinder (6) can be adaptively adjusted, wherein at least one diaphragm valve (14a) is accommodated in a housing (21) of the pressure control valve arrangement (7), said diaphragm valve (14a) having a diaphragm (25a) as the valve body, which diaphragm can be acted upon by introducing pressure medium into a control chamber (26a, 26b) that is covered on the outside of the housing by a cover (27a) in such a way that the control chamber (26a) is formed between the diaphragm (25a) and the cover (27a), and wherein at least one pressure medium channel (30) carrying pressure medium is formed in the housing (21) in the region of the cover (27a), **characterized in** that at least one cover (27a) has at least one projection (28) projecting into the pressure medium channel (30) in the housing, a pressure medium guiding surface (31) for directing the flow of the pressure medium carried in the pressure medium channel (30) being formed on said projection.

2. Pressure control valve arrangement according to Claim 1, **characterized in that** the projection (28) having the pressure medium guiding surface (31) projects into the pressure medium channel (30) at a location at which deflection of the flow of the pressure medium within the pressure medium channel (30) from a section (32) of the pressure medium channel (30) which leads in one direction into a section (33) of the pressure medium channel (30) which leads in another direction is envisaged.

3. Pressure control valve arrangement according to Claim 2, **characterized in that** one or the other section (33) of the pressure medium channel (30) extends as far as an aperture (29) in a side face (19a) of the housing (21), into which opening (29) the projection (28) of the cover (27a) projects in the manner of a spigot.

4. Pressure control valve arrangement according to Claim 2 or 3, **characterized in that** the deflection of the flow of the pressure medium within the pressure medium channel (30) is substantially 90 degrees.

5. Pressure control valve arrangement according to one of Claims 2 to 4, **characterized in that** the pressure medium guiding surface (31) of the projection (28) is designed to deflect the flow of the pressure medium from one direction to the other.

6. Pressure control valve arrangement according to one of the preceding claims, **characterized in that** the pressure medium channel (30) is a vent channel, which carries compressed air from a diaphragm valve (14a) designed as an outlet valve to a vent of the pressure control valve arrangement (7).

7. Pressure control valve arrangement according to Claim 6, **characterized in that** a central area of the cover (27a) serves to cover the control chamber (26a) of the diaphragm valve (14a) designed as an outlet valve, and the at least one projection (28) having the pressure medium guiding surface (31) is formed at the edge of a nose (35) of the cover (27a).

8. Pressure control valve arrangement according to one of the preceding claims, **characterized in that** the cover (27a) provided with the projection (28) and the pressure medium guiding surface (31) is designed as an integral injection molding made of plastic or metal.

9. Pressure control valve arrangement according to one of the preceding claims, **characterized in that** at least one electromagnetic control valve (15a), which can be controlled by an electronic control device (10), is provided for pilot control of the diaphragm valve (14a).

10. Brake-slip-controlled and fluid-pressure-actuated braking device for a vehicle, containing at least one pressure control valve arrangement (7) according to one of the preceding claims.

## Revendications

1. Ensemble vanne de réglage de la pression (7) pour le réglage de la pression d'un fluide dans un système de freinage ABS d'un véhicule d'une manière, qu'au cours d'une tendance à bloquer auxs roues individuelles d'un véhicule la pression de freinage est adaptable, de façon adaptif, dans au moins un cylindre de frein (6) affecté, dans lequel au moins une soupape à membrane (14a) est reçue dans un carter (21) de l'ensemble vanne de réglage de la pression (7), qui comprend une membrane (25a) en tant que corps de soupape, qui est apte à être commandé par l'admission d'un milieu sous pression dans une chambre de réglage (26a, 26b), qui est recouverte par un couvercle (27a) du côté extérieur dudit carter de telle façon, que ladite chambre de réglage (26a) soit formée entre ladite membrane (25a) et ledit couvercle (27a), et dans lequel au moins une conduite de milieu sous pression (30) est formée, qui passe au moins un milieu sous pression, **caractérisé en ce** qu'au moins un couvercle (27a) présente au moins une partie proéminente (28) faisant saillie dans ladite conduite de milieu sous pression (30) du côté de carter, à laquelle partie est formée une face de guidage de milieu sous pression (31) afin de diriger le courant du milieu sous pression passé dans ladite conduite de milieu sous pression (30).

2. Ensemble vanne de réglage de la pression selon la revendication 1, **caractérisé en ce** que ladite partie proéminente (28) avec ladite face de guidage de milieu sous pression fait saillie dans ladite conduite de milieu sous pression (30) à une site où il y a une déflection du flux dudit milieu sous pression à l'intérieur de ladite conduite de milieu sous pression (30), à partir d'une partie (32) de ladite conduite de milieu sous pression (30), qui mène en une première direction, en une autre partie (33) de ladite conduite de milieu sous pression (30), qui mène en une autre direction.

3. Ensemble vanne de réglage de la pression selon la revendication 1 ou 2, **caractérisé en ce** que ladite première partie (33) ou ladite autre partie de ladite conduite de milieu sous pression (30) s'étend à une ouverture d'embouchure (29) dans une face latérale (19a) dudit carter (21), dans laquelle fait saillie ladite partie proéminente (28) dudit couvercle (27a) sous forme d'un tenon.

4. Ensemble vanne de réglage de la pression selon la revendication 2 ou 3, **caractérisé en ce** que la déflection du flux dudit milieu sous pression à l'intérieur de ladite conduite de milieu sous pression (30) correspond essentiellement à 90 degrés.

5. Ensemble vanne de réglage de la pression selon une quelconque des revendication 2 à 4, **caractérisé en ce** que ladite face de guidage de milieu sous pression (31) de ladite partie proéminente (28) est conçue pour la déflection du flux dudit milieu sous pression à partir de la première direction en ladite autre direction.

6. Ensemble vanne de réglage de la pression selon une quelconque des revendications précédentes, **caractérisé en ce** que ladite conduite de milieu sous pression (30) est un passage d'aération, qui alimente de l'air comprimé à partir d'une soupape à membrane (14a), configurée sous forme d'une soupape de sortie, à un moyen d'aération de l'ensemble vanne de réglage de la pression (7).

7. Ensemble vanne de réglage de la pression selon la revendication 6, **caractérisé en ce** qu'une zone centrale dudit couvercle (27a)sert à recouvrir ladite chambre de réglage (26a) de ladite soupape à membrane (14a) configurée sous forme d'une soupape de sortie, et en ce qu'au moins ladite une partie proéminente (28) avec ladite face de guidage de milieu sous pression (31) est formée du côté de bord à un bec (35) dudit couvercle (27a).

8. Ensemble vanne de réglage de la pression selon une quelconque des revendications précédentes, **caractérisé en ce** que ledit couvercle (27a), qui est pourvu de ladite partie proéminente (28) et ladite face de guidage de milieu sous pression (31), est conçu sous forme d'un corps moulé par injection, en une seule pièce, en matière plastique ou métal.

9. Ensemble vanne de réglage de la pression selon une quelconque des revendications précédentes, **caractérisé en ce** qu'au moins une vanne de réglage électromagnétique (15a) est disposé pour le pilotage de ladite au moins seule soupape à membrane (14a), qui est commandable moyennant un module de réglage électronique (10).

10. Installation de freinage d'un véhicule, à régulation du glissement au freinage et opérable par un milieu sous pression, comprenant au moins un ensemble vanne de réglage de la pression (7) selon une quelconque des revendications précédentes.
